# EUROPEAN PATENT SPECIFICATION

(11) **EP 0 360 384 B1**
(45) Date of publication and mention of the grant of the patent: **16.02.1994**
(21) Application number: 89306876.7
(22) Date of filing: 06.07.1989
(51) Int. Cl.: G06F 1/16

(54) **Electronic apparatus with movable keyboard**
Elektronisches Gerät mit einer verstellbaren Tastatur
Appareil électronique à clavier déplaçable

(30) Priority: 22.09.1988 JP 236292/88
(43) Date of publication of application: 28.03.1990
(73) Proprietor: International Business Machines Corporation, Armonk, N.Y. 10504 (US)
(72) Inventor: Nomura, Hideo, Yokohama-shi Kanagawa-ken (JP); Takemoto, Motoji, Fujisawa-shi Kanagawa-ken (JP)
(74) Representative: Burt, Roger James, Dr.

(56) References cited:
- EP-A- 0 216 274
- EP-A- 0 273 750
- US-A- 4 704 604
- IBM TECHNICAL DISCLOSURE BULLETIN, vol. 28, no. 6, November 1985, pages 2361-2363, New York, US; "Keyboard support lifting assembly with locking feature"

## Description

This invention relates to an electronic apparatus with a movable keyboard, such as a transportable personal computer, in which the keyboard can be stored in a case for the apparatus in a position such that the surface of the keyboard on which the keys are mounted faces towards the inside of the case and the keyboard can be moved out of the case into a position in which it can be operated.

Japanese Published Unexamined Utility Model Application (PUUMA) No. 60-158228 [Japanese Utility Model Application (UMA) No. 59-45620] discloses an arrangement for storing a keyboard of electronic apparatus when not in use in which each lower front side of a case for the electronic apparatus is removably connected to each rear side of the keyboard by a projecting shaft. A groove for guiding the projecting shaft is provided, and a fitting area is provided at the end of the groove and fits with the projecting shaft, so that the keyboard, when it is not in use, can be used as a lid for the case.

Japanese PUUMA No. 63-39734 (Japanese UMA No. 61-129878) discloses a keyboard arranged to be stored in a case in which a projection is formed on either the keyboard or the body of the case and a rotating projection support member is formed on the other. The projection engages with the support member with a press fitting and a space is provided for rotation of the projection and the support member. The combination of the projection and the rotating projection support member is arranged to function as a hinge.

In both of the above arrangements, the keyboard is mounted on the case in such a manner that it can be pivoted from an operating position and stored in the case so that its surface mounted with keys faces inside the case. However, there is a problem in that the keys are difficult to operate because, when the keyboard is pivoted from the case into its operating position on a surface on which the apparatus is positioned, it becomes parallel to the apparatus positioning surface and this is not a convenient position for efficient operation of the keys.

The object of the present invention is to provide an electronic apparatus with a movable keyboard, such as a transportable personal computer, in which the keyboard can be stored in a case for the apparatus in a position such that the surface of the keyboard mounted with keys faces towards the inside of the case, and so that, when the keyboard is pivoted into its operating position on a positioning surface, it can be arranged with a predetermined inclination to the positioning surface.

According to the present invention, electronic apparatus with a movable keyboard, in which the keyboard can be mounted in a case for the apparatus in a position such that the surface of the keyboard on which the keys are mounted faces towards the inside of the case, comprises a pair of leg members, one of which is provided on one side of the keyboard and the other of which is provided on the other side of the keyboard, and a bottom portion formed in the case. The apparatus is characterised in that the bottom portion projects forward from each side of the case, each of the leg members has an end forming a curved surface and a recess formed continuously with the curved surface, and a pair of recesses are formed one at each side of the bottom portion, each of which has a receiving surface on which the curved surface of the end of a respective one of the leg members can slide and rotate and a projection capable of fitting into the recess in the leg member.

With such an arrangement, when the keyboard is pivoted from its position within the case to a surface on which the electronic apparatus is positioned, about a predetermined point of each leg member as a fulcrum by sliding and rotating the curved surface of the end of each leg member on the receiving surface formed on the corresponding recess formed in the bottom portion, the recess in each leg member is fitted into the corresponding projection in the bottom portion to provide a predetermined inclination for the keyboard relative to the surface.

In order that the invention may be more readily understood, an embodiment will now be described with reference to the accompanying drawings in which:
Figure 1 is a perspective view of a transportable personal computer in which a keyboard is stored and drawn out according to the invention,
Figure 2 is a perspective view of the transportable personal computer in which the keyboard is mounted in the case for the computer according to the invention,
Figure 3 is a side view illustrating leg members of the keyboard,
Figure 4 is a partial perspective view of a recess formed in one side of the bottom portion of the case,
Figure 5 is a partial view of the case illustrating a stopper actuating slide knob provided on the back of the keyboard,
Figure 6 is a side view illustrating pivoting of the keyboard relative to the case,
Figure 7 is a side view illustrating a state where the keyboard is fully pivoted and is supported on a surface where the personal computer is positioned,
Figure 8 is an illustration of an operation used to make the leg members on the keyboard pivotable,
Figure 9 is a side view illustrating pivoting of the leg members,
Figure 10 is an exploded perspective view illustrating an example of a mechanism to make the leg members pivotable,
Figure 11 is a side view illustrating the keyboard in a state where the leg members are pivoted through 90 degrees, and
Figure 12 is a side view illustrating the method of using the keyboard in the state of Figure 11.

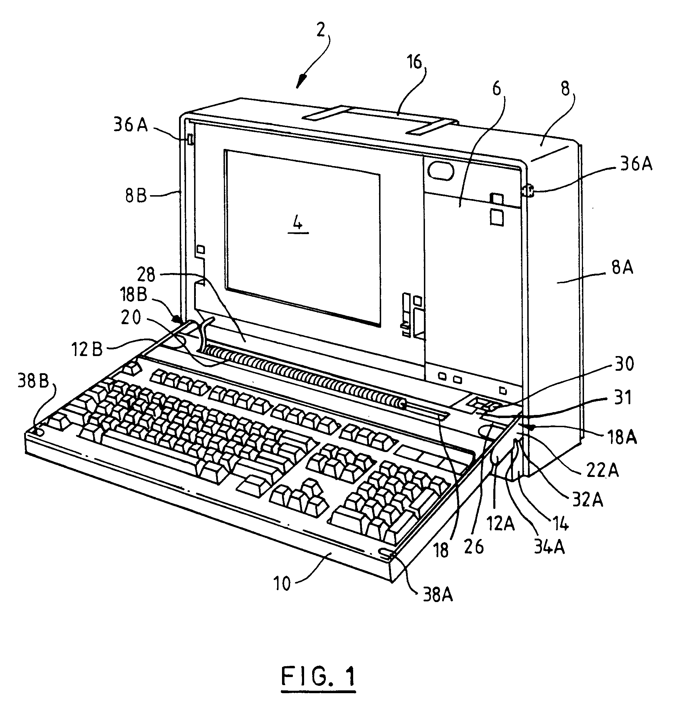

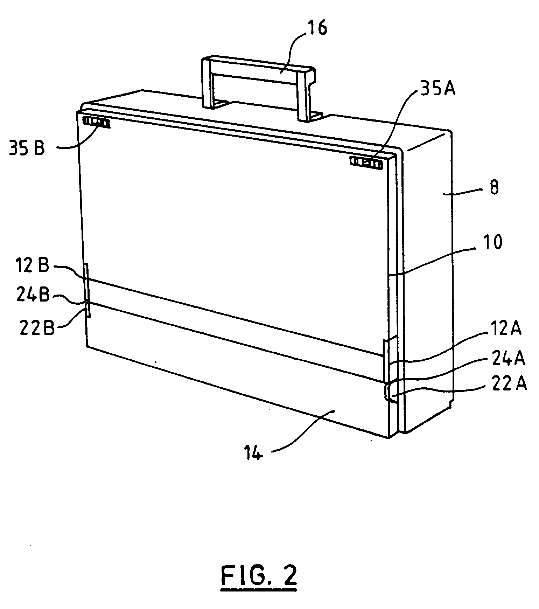

Figures 1 and 2 show an embodiment where the invention is applied to a transportable personal computer 2. Figure 1 shows a state of the computer 2 in which a keyboard 10 is taken out from a case 8 and rests on a positioning surface on which the transportable personal computer 2 is positioned, while Figure 2 shows the transportable personal computer in a state where the keyboard is mounted in the case. In these Figures, the case 8 of the transportable personal computer 2 houses a flat display 4 consisting of a plasma display, and a floppy disk drive 6. The keyboard 10 is arranged to be freely mounted in and dismounted from the case 8. In a state where the keyboard 10 is mounted in the case 8, as shown in Figure 2, it constitutes a part of the case, so that the transportable personal computer 2 can be carried around by means of a handle 16.

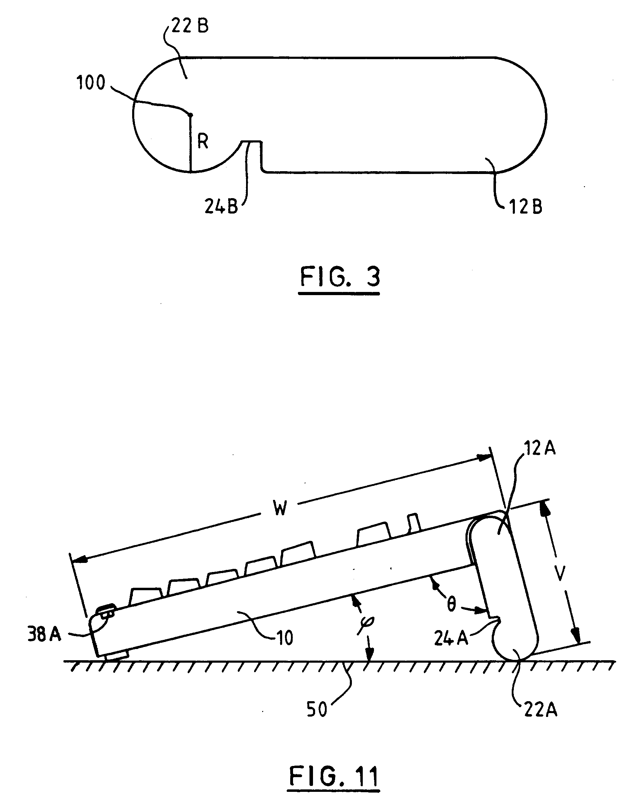

A pair of leg members 12A and 12B are provided at the rear of one side and the other of the keyboard 10 respectively. As shown in Figure 3, the leg members 12A and 12B have round ends 22A and 22B, as well as recesses 24A and 24B respectively, extending from these round ends. Preferably, the round end 22B has a radius of R equal to half the width of the side of the keyboard 10. This ensures that, when the keyboard 10 is mounted in the case 8, the leg members 12A and 12B do not project above the keyboard, and sufficient strength for supporting the keyboard is provided by the leg members. The lower portion of the case 8 is provided with a bottom portion 14 so that it projects forward from the sides 8A and 8B of the case.

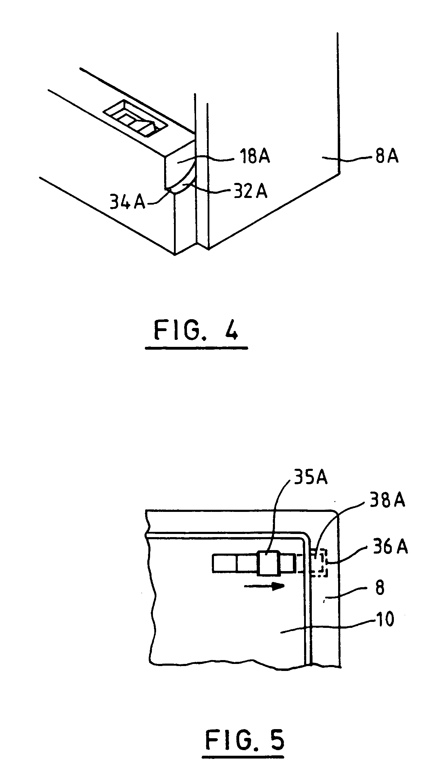

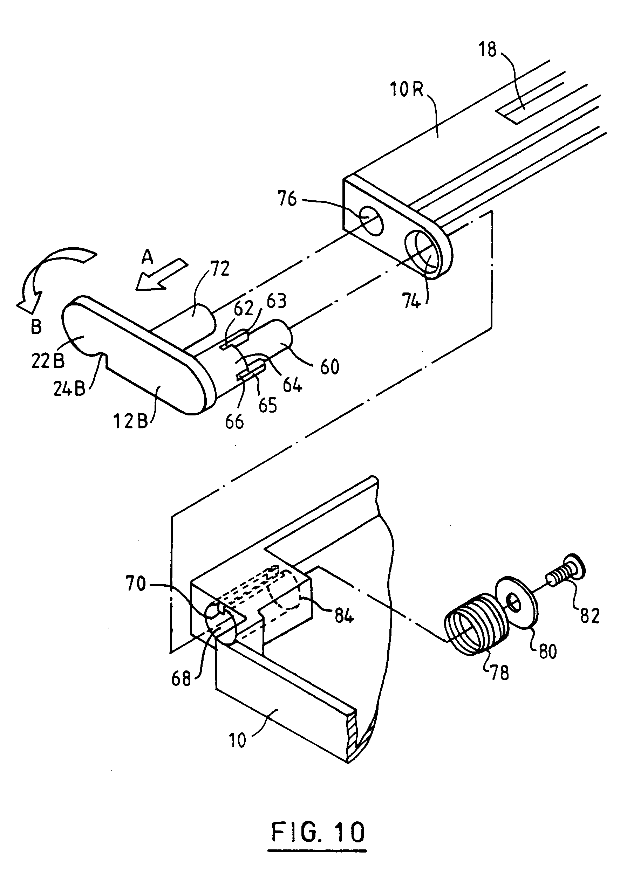

A pair of recesses 18A and 18B are formed on one side and the other side of the bottom portion 14 respectively. Figure 4 shows the recess 18A in the bottom portion 14 formed on the side 8A of the case 8. The recess 18A has a receiving surface 32A on which the curved surface of the end 22A of the leg member 12A can slide with a rotational motion, and an end 34A that can fit into the recess 24A of the leg member 12A. Similarly, the recess 18B in the bottom portion 14 formed on the side 8B of the case 8 also has a receiving surface 32B on which the curved surface of the end 22B of the leg member 12B can slide, and an end 34B that can fit into the recess 24B for the leg member 12B (see Figure 10).

The ends 22A and 22B of the leg members 12A and 12B are mounted on the keyboard 10 so as to project from its rear end 26. They are arranged in such a manner that, when the keyboard 10 is mounted on the case 8 in the upright position as shown in Figure 2, they prevent the rear end 26 of the keyboard 10 from contacting the upper surface 28 of the bottom portion 14 of the case 8.

A power switch 30 is provided on the upper surface 28 of the bottom portion 14. A projection 31 is provided on the rear end 26 of the keyboard 10 at a location corresponding to that of the power switch 30 so that the power switch 30 will be turned off when the keyboard 10 is mounted in the upright position as shown in Figure 2. That is, the projection 31 pushes the power switch 30, and turns it off.

Provided at the rear of the surface of the keyboard 10 adjacent to the keys is a groove 18 for receiving a cord 20 so that the cord does not preclude the rotation of the keyboard 10 during the mounting or dismounting operations.

A stopper actuating slide knob 35A is provided at the right front portion of the back (lower surface) of the keyboard 10. Correspondingly, a stopper receiving recess 36A is formed in the side 8A of the case 8. As shown in Figure 5, when the stopper actuating slide knob 35A is slid to the right while the keyboard 10 is in the upright position within the case 8, a stopper 38A enters into the recess 36A to prevent the keyboard 10 from being removed from the case 8. Similarly, a stopper actuating slide knob 35B is also provided at the left front portion of the back (lower surface) of the keyboard 10. Correspondingly, a stopper receiving recess 36B is formed in the side 8B of the case 8.

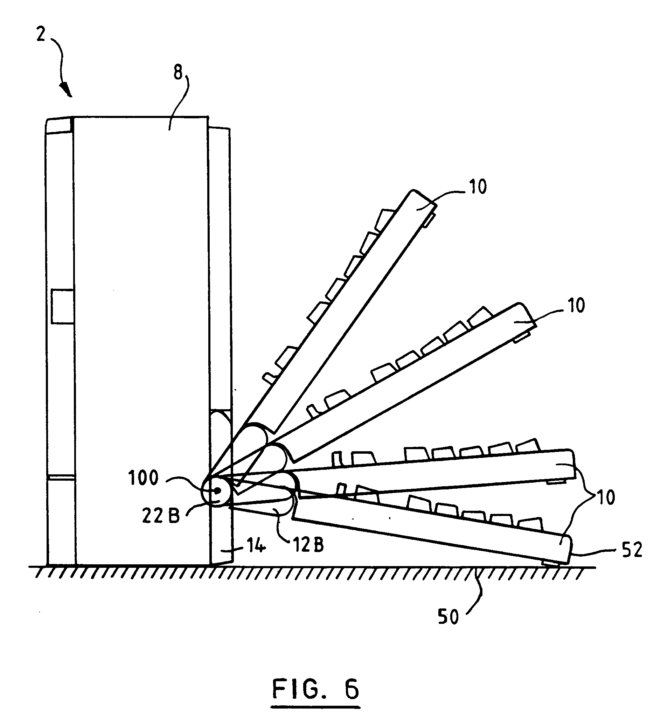

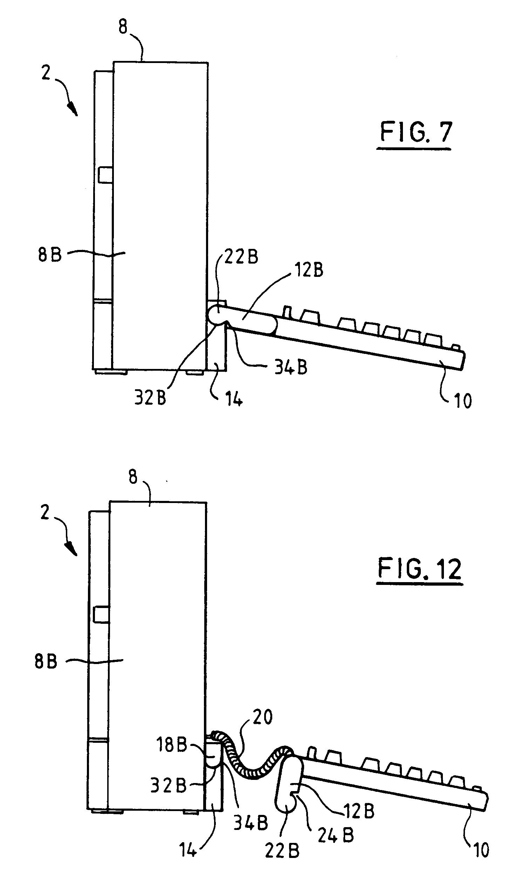

When the keyboard 10 is mounted upright in the case 8 as shown in Figure 2 and is to be dismounted, the stopper actuating slide knobs 35A and 35B mounted on the back of the keyboard 10 are first slid to the left and right, respectively, to extract the stoppers from the recesses 36A and 36B. Then, as shown in Figure 6, the keyboard 10 is pivoted outwardly towards the surface 50, on which the transportable personal computer 2 is positioned, about the centre 100 of the ends 22A and 22B of the leg members 12A and 12B of the keyboard 10 as a fulcrum by sliding the curved surfaces of ends 22A and 22B of the leg members 12A and 12B of the keyboard 10 over the receiving surfaces 32A and 32B of the bottom portion 14 with rotational motion. When the front edge 52 of the keyboard 10 contacts the positioning surface 50, the recesses 24A and 24B of the leg members 12A and 12B engage with the ends 34A and 34B of the recesses in the bottom portion 14 of the case 8 to provide a predetermined inclination for the keyboard 10 relative to the case and the surface 50 as shown in Figure 7.

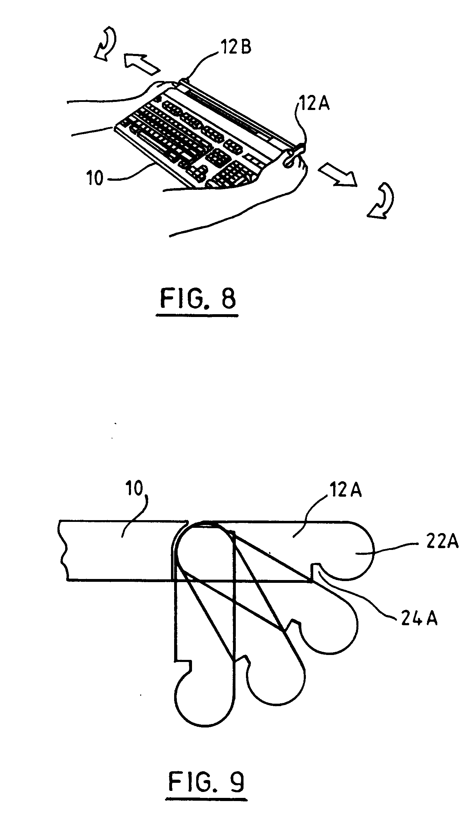

As shown in Figure 8, the leg members 12A and 12B can be pivoted through 90 degrees relative to the keyboard 10 as shown in Figure 9 by initially moving the leg member to the right and left, respectively.

Figure 10 shows a mechanism provided on the leg member 12B for allowing the pivoting of the leg member relative to the keyboard 10. Projections 63 and 65 for preventing the pivoting of the leg member, and a projection 64 for restricting the pivoting angle located between the projections 63 and 65, are provided on the outer periphery of a pivoting shaft 60 at the end of the leg member 12B opposite to the end 22B. Grooves 62 and 66 for fixing the leg member are formed at locations between the pivoting preventing projection 63 and the pivoting angle restricting projection 64, and between the pivoting preventing projection 65 and the pivoting angle restricting projection 64, respectively. The pivoting shaft 60 passes through an opening 74 in a keyboard rear member 10R, in which the cord receiving groove 18 of the keyboard 10 is formed, and into a cavity 68 formed in the main body of the keyboard 10. The portion of the rotating shaft 60 projected into the cavity 68 is wound with a coil spring 78. A threaded hole is formed in the end of the pivoting shaft 60. A ring 80 is fastened by a screw 82 onto the portion of the pivoting shaft 60 wound with the coil spring 78. In the arrangement illustrated, the groove 62 is in a position in which it engages with a projection 70 in the cavity 68, and the coil spring 78 fits between a wall 84 at the inner end of the cavity and the ring 80 to bias the leg member 12B in the direction opposite to that of arrow A.

To pivot the leg member 12B, it is drawn out against the action of the spring 78 as illustrated in Figure 8 with the pivoting shaft 60 in the direction of the straight arrow to release the groove 62 from engagement with the projection 70. Then, the leg member 12B can be pivoted in the direction of the curved arrow. However, when it has been pivoted through 90 degrees, the projection 70 abuts against the projection 65. At that moment, if the leg member 12B is released, under the action of the spring 78 the projection 70 fits into the groove 66 to fix the leg member 12B at a position after pivoting through 90 degrees and prevents further pivoting. In Figure 10, a shaft 72 of the leg member 12B is inserted into a cavity 76 in the rear member 10R of the keyboard 10 to cause the rear member 10R to pivot through 90 degrees together with the leg member 12B as it pivots.

Leg member 12A is provided with a similar pivot control arrangement.

Figure 11 shows a state where the keyboard 10 is supported on the surface 50 for positioning the personal computer 2 after pivoting of the leg members 12A and 12B through 90 degrees. Because the angle ϑ between the keyboard 10 and the leg member 12A is 90 degrees, the angle φ of inclination of the keyboard 10 to the positioning surface 50 can be determined if the length W of the side of the keyboard and the length V of the leg member 12A are known. Figure 12 shows a state where the keyboard 10 of the personal computer 2 is in use after rotation of the leg members 12A and 12B through 90 degrees as in Figure 11.

As described, according to the embodiment, a first inclination angle of the keyboard 10 can be set by fitting the recesses 24A and 24B of the leg members 12A and 12B into the ends 34A and 34B of the recesses in the bottom portion 14, respectively, while maintaining the leg members 12A and 12B parallel to the keyboard 10 (see Figure 7). A second inclination angle of the keyboard 10 can be set by removing the leg members 12A and 12B from engagement with the recesses 18A and 18B respectively and pivoting them through 90 degrees (see Figure 12).

Although, in the above embodiment, the ends 22A and 22B of the leg members 12A and 12B are formed so as to be round, they do not necessarily have to be round, but may be of any shape as long as curved surfaces are formed on the ends 22A and 22B allowing them to slide and rotate on the receiving surfaces 32A and 32B of the bottom 14 to rotate the keyboard 10.

The mechanism causing the leg members 12A and 12B to pivot may be that disclosed in Japanese PUUMA No. 61-164533 (UMA No. 60-47078), Japanese PUUMA No. 62-28241 (UMA No. 60-120479), or Japanese PUUMA No. 59-166324 (UMA No. 58-60550) as an alternative to that shown in Figure 10. This means that any mechanism enabling the leg members 12A and 12B to pivot through a predetermined angle, and to be fixed at a predetermined angular position, may be employed.

Furthermore, the invention is not limited to an arrangement in which the leg members 12A and 12B can be pivoted, but includes an arrangement where the leg members 12A and 12B are fixed. It is because, even if they are fixed, a predetermined inclination can be provided for the keyboard 10 just by fitting the recesses 24A and 24B of the leg members 12A and 12B into the ends 34A and 34B of the recesses in the bottom portion 14, respectively.

Also, although the above embodiment relates to a transportable personal computer, it will be obvious to persons skilled in the art that it can be applied to a desk top personal computer or other similar apparatus.

In addition, it will be obvious to persons skilled in the art that the invention is not limited to a personal computer, but can be generally applied to a larger computer and other electronic apparatus such as a word processor.

## Claims

1. Electronic apparatus (2) with a movable keyboard (10), in which the keyboard can be mounted in a case (8) for the apparatus in a position such that the surface of the keyboard on which the keys are mounted faces towards the inside of the case, comprising;
a pair of leg members (12A, 12B), one of which is provided on one side of said keyboard and the other of which is provided on the other side of said keyboard, and
a bottom portion (14) formed in said case,
characterised in that
said bottom portion projects forward from each side of said case,
each of said leg members has an end (22A, 22B) forming a curved surface and a recess (24A, 24B) formed continuously with said curved surface, and
a pair of recesses (18A, 18B) are formed one at each side of said bottom portion, each of which has a receiving surface (32A, 32B) on which the curved surface of the end of a respective one of said leg members can slide and rotate and a projection (34A, 34B) capable of fitting into the recess in said leg member,
whereby, when said keyboard is pivoted from its position within the case to a surface (50) on which said electronic apparatus is positioned, about a predetermined point (100) of each leg member as a fulcrum by sliding and rotating the curved surface of the end of each leg member on the receiving surface formed on the corresponding recess formed in said bottom portion, the recess in said leg member is fitted into the projection in said bottom portion to provide a predetermined inclination for said keyboard relative to said surface.

2. Electronic apparatus as claimed in Claim 1, characterised in that each of said leg members (12A, 12B) can be removed from its corresponding recess formed in said bottom portion and pivoted relative to said keyboard so as to provide means for supporting said keyboard at another predetermined inclination relative to said surface.

3. Electronic apparatus as claimed in Claims 1 or 2, characterised in that the curved end of each leg member (22A, 22B) has a circular shape.

4. Electronic apparatus as claimed in any one of the preceding claims, characterised in that each leg member (12A, 12B) projects from the rear end of said keyboard (10).

5. Electronic apparatus as claimed in any one of the preceding claims characterised in that a projection (31) is provided on the rear end of said keyboard (10) and a power switch (30) is mounted on the top surface of said bottom portion (14), whereby said projection turns off said power switch when said keyboard is mounted in position in said case.

## Patentansprüche

1. Ein elektronisches Gerät (2) mit einer verstellbaren Tastatur (10), die in einem Koffer (8) für das Gerät in einer Position montiert werden kann, in der die Oberseite der Tastatur, auf der sich die Tasten befinden, dem Inneren des Koffers zugewandt ist, umfassend:
ein Paar Beinelemente (12A, 12B), von denen sich das eine auf der einen und das andere auf der anderen Seite der Tastatur befindet, und
einen Unterteil (14), der in dem Koffer ausgebildet ist,
dadurch gekennzeichnet, daß
der Unterteil über beide Seiten des Koffers nach vorn hinausragt,
beide Beinelemente je ein Ende (22A, 22B) aufweisen, das eine gekrümmte Oberfläche und eine unmittelbar daran anschließende Vertiefung (24A, 24B) besitzt, und
sich an den beiden Seiten des Unterteils ein Paar Vertiefungen (18A, 18B) befindet, die jeweils eine aufnehmende Oberfläche (32A, 32B), auf der die gekrümmte Oberfläche des Endes des jeweiligen Beinelementes gleiten und sich drehen kann, und einen Vorsprung (34A, 34B) aufweisen, der in die Vertiefung des betreffenden Beinelementes paßt,
wodurch, wenn die Tastatur um einen vorbestimmten Punkt (100) der einzelnen Beinelemente als Drehpunkt aus ihrer Position im Koffer auf eine Unterlage (50), auf der das elektronische Gerät steht, geklappt wird, indem die gekrümmte Oberfläche am Ende der einzelnen Beinelemente auf der aufnehmenden Oberfläche, die sich auf der entsprechenden Vertiefung in dem Unterteil befindet, geschoben und gedreht wird, die Vertiefung in dem Beinelement in den Vorsprung im Unterteil eingepaßt wird, um eine vorbestimmte Neigung der Tastatur gegenüber der Unterlage herzustellen.

2. Ein elektronisches Gerät nach Anspruch 1, dadurch gekennzeichnet, daß jedes der Beinelemente (12A, 12B) aus der entsprechenden Vertiefung herausgenommen werden kann, die sich in dem Unterteil befindet, und so gegenüber der Tastatur geschwenkt werden kann, daß es ein Mittel zur Stützung der Tastatur mit einer anderen Neigung gegenüber der Unterlage darstellt.

3. Ein elektronisches Gerät nach Anspruch 1 oder 2, dadurch gekennzeichnet, daß das gekrümmte Ende der einzelnen Beinelemente (12A, 12B) kreisförmig ist.

4. Ein elektronisches Gerät nach einem beliebigen der vorangegangenen Ansprüche, dadurch gekennzeichnet, daß die einzelnen Beinelemente (12A, 12B) über das hintere Ende der Tastatur (10) hinausragen.

5. Ein elektronisches Gerät nach einem beliebigen der vorangegangenen Ansprüche, dadurch gekennzeichnet, daß sich am hinteren Ende der Tastatur (10) ein Vorsprung (31) befindet und auf der Oberseite des Unterteils (14) ein Hauptschalter montiert ist, wodurch der Vorsprung den Hauptschalter ausschaltet, wenn die Tastatur in der Position im Koffer montiert wird.

## Revendications

1. Appareil électronique (2) avec un clavier mobile (10), dans lequel le clavier peut être monté dans un boîtier (8) pour que l'appareil soit dans une position telle que la surface du clavier sur laquelle sont montées les touches soit dirigée vers l'intérieur du boîtier, comprenant:
une paire d'éléments en forme de pattes (12A, 12B), l'une d'elles étant prévue d'un côté dudit clavier et l'autre étant prévue de l'autre côté dudit clavier, et
une partie formant fond (14) formée dans ledit boîtier,
caractérisé en ce que
ladite partie formant fond fait saillie vers l'avant de chaque côté dudit boîtier,
chacun desdits éléments en forme de pattes comporte une extrémité (22A, 22B) formant une surface courbe et un creux (24A, 24B) formé en continuité avec ladite surface courbe, et
une paire de creux (18A, 18B) est formée de chaque côté de ladite partie formant fond, chacune d'elles ayant une surface de réception (32A, 32B) sur laquelle la surface courbe de l'extrémité d'un élément respectif en forme de patte parmi lesdits éléments en forme de pattes peut coulisser et tourner et une saillie (34A, 34B) pouvant s'adapter dans le creux prévu dans ledit élément en forme de patte,
de manière que, lorsque ledit clavier pivote depuis sa position à l'intérieur du boîtier vers une surface (50) sur laquelle ledit appareil électronique est positionné, autour d'un point prédéterminé (100) de chaque élément en forme de patte comme un point d'appui de levier en faisant coulisser et tourner la surface courbe de l'extrémité de chaque élément en forme de patte sur la surface de réception formée sur le creux correspondant formé dans ladite partie formant fond, le creux dans ledit élément en forme de patte est adapté dans la saillie dans ladite partie formant fond pour obtenir une inclinaison prédéterminée dudit clavier par rapport à ladite surface.

2. Appareil électronique selon la revendication 1, caractérisé en ce que chacun desdits éléments en forme de pattes (12A, 12B) peut être retiré de son creux correspondant formé dans ladite partie formant fond et peut pivoter par rapport audit clavier de manière à fournir un moyen pour supporter ledit clavier selon une autre inclinaison par rapport à ladite surface.

3. Appareil électronique selon les revendications 1 ou 2, caractérisé en ce que l'extrémité courbe de chaque élément en forme de patte (22A, 22B) a une forme circulaire.

4. Appareil électronique selon l'une quelconque des revendications précédentes, caractérisé en ce que chaque élément en forme de patte (12A, 12B) fait saillie de l'extrémité arrière dudit clavier (10).

5. Appareil électronique selon l'une quelconque des revendications précédentes caractérisé en ce qu'une saillie (31) est prévue sur l'extrémité arrière dudit clavier (10) et un interrupteur général (30) est monté sur la surface supérieure de ladite partie formant fond (14), de manière que ladite saillie mette ledit interrupteur général hors circuit lorsque le clavier est monté en position dans ledit boîtier.
